# FASCICULE DE BREVET EUROPEEN

(11) **EP 1 281 940 B1**
(45) Date de publication et mention de la délivrance du brevet: **22.03.2006**
(21) Numéro de dépôt: 02356156.6
(22) Date de dépôt: 01.08.2002
(51) Int. Cl.: G01F 23/22

(54) **Détection de niveau de fluide utilisant la dilatation thermique d'un tube capillaire**
Erfassung des Flüssigkeitsstandes unter Benutzung der Wärmedehnung eines Kapillarrohrs
Fluid level detection using thermal expansion of a capillary tube

(30) Priorité: 02.08.2001 FR 0110405
(43) Date de publication de la demande: 05.02.2003
(73) Titulaire: SA Societe Thermique de Valence, 26000 Valence (FR)
(72) Inventeur: Ladet, M. Jean-Michel, 07800 Saint Georges les Abins (FR); Perge, Jean-Marc, 07500 Guilherand-Granges (FR)
(74) Mandataire: Maureau, Philippe

(56) Documents cités:
- FR-A- 1 314 000
- FR-A- 2 214 881
- US-A- 2 978 691
- US-A- 3 031 887
- US-A- 3 132 514

## Description

La présente invention concerne un dispositif de détection d'une quantité d'eau chaude présente dans un chauffe-eau.

La production d'eau chaude domestique peut se faire par un chauffe-eau à accumulation.

Un chauffe-eau comprend un réservoir calorifugé et des moyens de chauffage. De l'eau froide, qui est introduite dans le réservoir, est chauffée, par exemple, par une résistance électrique.

Cette eau chaude est ensuite soutirée du réservoir, pour être consommée par, notamment, sous forme de douche ou de bain.

Un inconvénient des chauffe-eau actuels réside dans le fait qu'il est impossible pour un utilisateur de déterminer la quantité d'eau chaude restant dans le réservoir après plusieurs soutirages.

Si bien qu'un utilisateur pourrait entreprendre une opération nécessitant une certaine quantité d'eau chaude, par exemple un bain, sans qu'il ne reste une quantité d'eau chaude suffisante dans le chauffe-eau pour réaliser cette opération.

On connaît du document US-A-2 978 691 un système de jauge de liquide conservé à très basse température et du document FR-A-1 314 000 un dispositif de repérage du niveau d'un liquide ne comportant aucun élément mobile.

Un but de l'invention est donc de fournir un dispositif permettant de détecter un volume d'eau chaude présente dans le chauffe-eau de production d'eau chaude.

Un autre but de l'invention est de fournir un dispositif simple, fiable, et peu coûteux.

Selon l'invention, le dispositif de détection d'une quantité d'eau chaude comprend les caractéristiques de la revendication 1.

Grâce au moyen d'amplification de la variation volumique du fluide, lorsque de l'eau chaude est soutirée du réservoir en quantité telle que de l'eau froide atteint le moyen d'amplification, le fluide connaît une brutale contraction volumique, cette contraction étant très supérieure à celle qu'il subit dans la partie capillaire dont la section est très petite par rapport à sa longueur.

Cette contraction de fluide se traduit par une variation très sensible du signal permettant à un utilisateur de quantifier la quantité d'eau chaude présente dans le réservoir.

De manière avantageuse, les moyens d'amplification sont répartis suivant des intervalles réguliers par rapport à la hauteur.

Cette répartition des moyens d'amplification, par exemple au niveau de chaque quart de la hauteur de réservoir permet à l'utilisateur d'évaluer rapidement la quantité d'eau chaude.

Selon un mode de réalisation préféré de l'invention, le tube capillaire présente au moins un serpentin.

Ce serpentin permet de réaliser une surface d'échange entre l'eau présente dans le chauffe-eau et le fluide, très supérieure à la surface d'échange réalisée au niveau du tube capillaire, si bien qu'une variation de la température de l'eau présente dans le chauffe-eau se traduit par une variation très peu sensible du volume fluide dans le tube capillaire mais se traduit par une variation brutale du volume du fluide dans le serpentin.

Selon une autre possibilité, le tube capillaire présente au moins un renflement bulbaire.

Le renflement bulbaire renferme un volume de fluide proportionnellement beaucoup plus important que le volume contenu dans la partie droite du tube capillaire. Par conséquent, une variation de température de l'eau contenue dans le chauffe-eau se traduit par une variation très peu sensible du volume du fluide dans le tube capillaire mais se traduit par une variation très importante du volume du fluide contenu dans le renflement bulbaire.

Un mécanisme transforme la dilatation du fluide en un signal visuel indiquant la quantité d'eau chaude présente dans le chauffe-eau.

En outre, une tige relie la membrane à la bielle, un ressort de rappel sollicitant la bielle dans une direction opposée à la dilatation de la membrane.

Selon une autre caractéristique, la crémaillère est guidée chacune de ses extrémités par deux paliers.

Pour sa bonne compréhension, l'invention est décrite en référence au dessin annexé représentant à titre d'exemple non limitatif un dispositif selon celle-ci.
La figure 1 est une vue en coupe d'un chauffe-eau intégrant ce dispositif.
La figure 2 montre en vue agrandie un détail de ce dispositif.

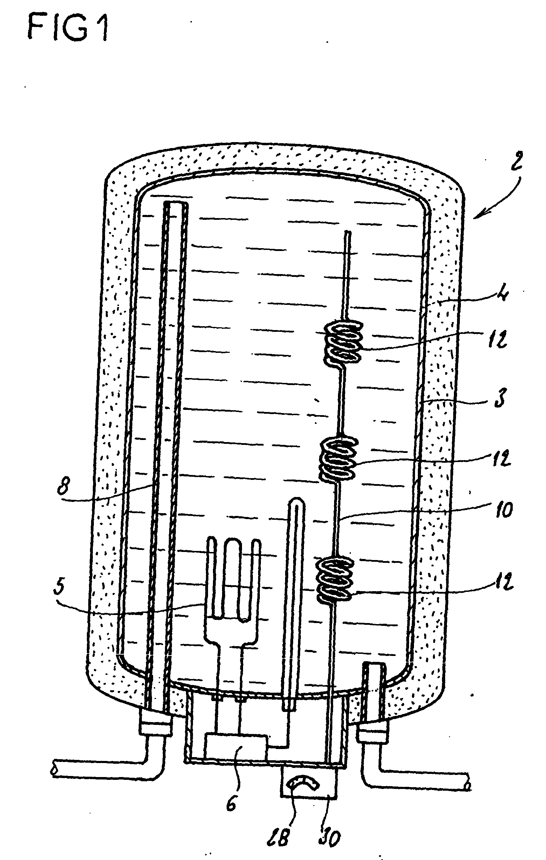

La figure 1 montre un chauffe-eau 2 comprenant un réservoir 3 entouré d'un matériau calorifuge 4 et une résistance 5 associée à un thermostat 6.

Le soutirage de l'eau chaude produite par le chauffe-eau est réalisé par un tuyau 8 réalisant un piquage dans la partie haute du chauffe-eau 2, tandis que l'eau froide est introduite dans la partie basse du chauffe-eau.

Un tube capillaire 10 est disposé verticalement à l'intérieur du réservoir 3.

Le tube capillaire 10 présente trois portions en spirale 12 réparties de manière équidistante sur toute la hauteur du réservoir 3 et divisant celui-ci en quatre volumes égaux.

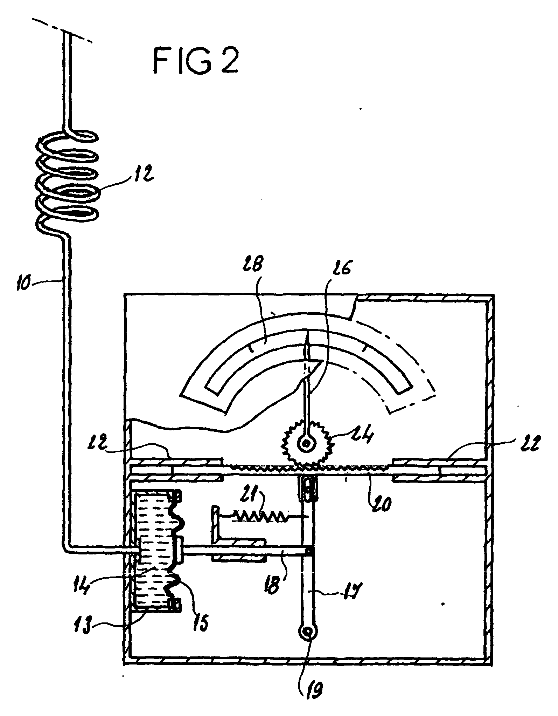

Comme cela apparaît sur la figure 2, le tube capillaire 10 débouche dans un réservoir 13.

Le tube capillaire 10 et le réservoir 13 contiennent un fluide 14.

Le réservoir 13 est obturé sur l'une de ses faces par une membrane élastique 15, susceptible de se tendre sous l'effet de la dilatation du fluide 14.

La membrane 15 est reliée à une bielle 17 par l'intermédiaire d'une tige 18.

Cette bielle 17, à l'une de ses extrémités est articulée sur un axe fixe 19 et à l'autre de ses extrémités, est reliée à une crémaillère 20.

Un pignon 24 s'engrène sur la crémaillère 20 et commande le déplacement d'une aiguille 26 qui se place devant une échelle graduée 28.

Un boîtier 30 assure le capotage de ce mécanisme.

Le fonctionnement du dispositif est le suivant.

On admettra que dans son état initial, le chauffe-eau est dans un état tel que de l'eau chaude remplit 100% du volume intérieur du réservoir 3.

Dans cet état, le fluide 14 est dans un état de dilatation maximale, c'est-à-dire la membrane 15 est dans un état de tension maximale telle que la tige 18 pousse la bielle 17 dans une position dans laquelle l'aiguille 26 se positionne sur l'échelle graduée 28 en face de l'indication montrant à un utilisateur que le réservoir 3 est rempli d'eau chaude à 100%.

Lorsque l'utilisateur soutire une quantité d'eau chaude, simultanément de l'eau froide est introduite dans la partie basse du réservoir 2.

Lorsqu'une quantité d'eau chaude correspondant au quart du volume du réservoir est soutirée, le niveau d'eau froide atteint le serpentin 12 situé du côté de la partie basse du réservoir.

En atteignant le serpentin 12, l'eau froide entraîne une contraction du fluide 14.

Le serpentin 12 présentant une surface d'échange très supérieure à la partie droite du tube capillaire 10, la contraction du fluide 14 se produit essentiellement lorsque l'eau froide atteint le serpentin. La contraction du fluide 14 est quasiment négligeable dans sa partie droite.

La contraction du fluide 14 se traduit par une diminution de là tension de la membrane 15 de telle sorte que le ressort de rappel 21 sollicite la bielle 17 vers une position dans laquelle elle entraîne l'aiguille en face d'un marquage du cadran 28 montrant que le réservoir contient 75% d'eau chaude.

En poursuivant le soutirage d'eau chaude, le niveau d'eau froide monte dans le réservoir jusqu'à atteindre le serpentin 12 situé au niveau de la partie médiane du réservoir.

Le fluide 14 se contracte encore et la tension de la membrane 15 diminue, de sorte que le ressort sollicite la bielle 17 vers la position illustrée à la figure 2, c'est-à-dire une position conduisant à placer l'aiguille devant le repère du cadran indiquant que le réservoir du chauffe-eau contient 50% d'eau chaude.

Cette information permet à l'utilisateur d'évaluer la quantité d'eau chaude restant dans le chauffe-eau et donc lui fait savoir que l'eau chaude nécessaire à, par exemple, un bain n'est pas présente dans le chauffe-eau mais que ce dernier renferme suffisamment d'eau chaude pour une douche.

Le dispositif qui n'utilise que l'énergie de l'eau chaude stockée dans le chauffe-eau permet donc de visualiser la quantité d'eau chaude restant dans un chauffe-eau.

Il va de soi que l'invention n'est pas limitée au mode de réalisation décrit ci-dessus mais qu'elle en embrasse, au contraire, toutes les formes de réalisations.

Ainsi, dans une forme de réalisation du dispositif non représenté sur le dessin, des renflements bulbaires sont ménagés dans le tube capillaire. Ces renflements qui renferment une quantité de fluide 14 beaucoup plus importante que la quantité de fluide 14 renfermée dans la paroi droite du tube capillaire amplifient les variations de température de l'eau contenue dans le chauffe-eau.

De plus, le dispositif pourrait comprendre un nombre de serpentins supérieur à trois dans le cas d'un chauffe-eau de grand volume ou inférieur à trois dans le cas d'un chauffe-eau de petit volume.

Ce système pourrait être relié à un dispositif électronique pour transmettre une information à un afficheur numérique.

## Revendications

1. Dispositif de détection d'une quantité d'eau chaude présente dans un chauffe-eau comprenant un réservoir (3) calorifugé et des moyens de chauffage (5) comprenant :
- un tube capillaire (10) contenant un fluide (14) susceptible de connaître des variations volumiques en fonction de la quantité d'eau chaude présente dans le réservoir (3),
- au moins un moyen d'amplification de la variation volumique du fluide (14),
- un mécanisme transformant la dilatation du fluide (14) en un signal visuel indiquant la quantité d'eau chaude présente dans le chauffe-eau, **caractérisé en ce que** le tube capillaire (10) débouche dans un réservoir (13) obturé par une membrane élastique (15), le déplacement de la membrane (15) sous l'effet des variations volumiques du fluide (14) faisant pivoter une bielle (17), la bielle (17) entraînant le déplacement rectiligne d'une crémaillère (20) sur laquelle s'engrène un pignon (24) solidaire d'une aiguille (26) se positionnant devant une échelle graduée (28).

2. Dispositif selon la revendication 1, **caractérisé en ce que** les moyens d'amplification sont répartis suivant des intervalles réguliers par rapport à la hauteur du réservoir.

3. Dispositif selon la revendication 1 ou la revendication 2, **caractérisé en ce que** le tube capillaire (10) présente au moins un serpentin (12).

4. Dispositif selon la revendication 1 ou la revendication 2, **caractérisé en ce que** le tube capillaire (10) présente au moins un renflement bulbaire.

5. Dispositif selon l'une des revendications 1 à 4, **caractérisé en ce qu'**une tige (18) relie la membrane (15) à la bielle (17), un ressort de rappel (21) sollicitant la bielle (17) dans une direction opposée à la membrane (15).

6. Dispositif selon l'une revendications 1 à 5, **caractérisé en ce que** la crémaillère (20) est guidée dans son déplacement rectiligne à chacune de ses extrémités par deux paliers (22).

## Patentansprüche

1. Vorrichtung zur Erfassung einer Warmwasser-Menge in einem Wassererhitzer mit einem Speicherbehälter (3) und Heizmitteln (5) sowie mit:
- einem Kapillarrohr (10), welches ein Fluid (14) enthält, das Volumenänderungen in Abhängigkeit von der in dem speicherbehälter (3) vorhandenen Warmwasser-Menge erfahren kann;
- mindestens einem Mittel zur Verstärkung der Volumenänderung des Fluids (14); und
- einem Mechanismus, welcher die Volumenausdehnung des Fluids (14) in ein visuelles Signal umwandelt, das die in dem Wassererhitzer vorhandene Warmwasser-Menge anzeigt, **dadurch gekennzeichnet, dass** das Kapillarrohr (10) in einen Speicherbehälter (13) mündet, der durch eine elastische Membran (15) blockiert bzw. begrenzt ist, wobei die Bewegung der Membran (15) unter der Einwirkung der Volumenänderungen des Fluids (14) eine Kuppelstange (17) bewegt, welche eine geradlinige Bewegung einer Zahnstange (20) bewirkt, mit welcher ein Ritzel (24) kämmt, das mit einem Zeiger (26) verbunden ist, der sich vor einer Instrumentenskala positioniert.

2. Vorrichtung nach Anspruch 1, **dadurch gekennzeichnet, dass** die Verstärkungsmittel in regelmäßigen Abständen bezüglich der Höhe des Speicherbehälters (3) verteilt sind.

3. Vorrichtung nach Anspruch 1 oder Anspruch 2, **dadurch gekennzeichnet, dass** das Kapillarrohr (10) mindestens eine Rohrschlange (12) aufweist.

4. Vorrichtung nach Anspruch 1 oder Anspruch 2, **dadurch gekennzeichnet, dass** das Kapillarrohr (10) mindestens eine zwiebel- oder blasenartige Ausbauchung aufweist.

5. vorrichtung nach einem der Ansprüche 1 bis 4, **dadurch gekennzeichnet, dass** eine Stange (18) die Membran (15) mit der Kuppelstange (17) verbindet, wobei eine Rückstellfeder (21) auf die Kuppelstange (17) in einer zur Membran (15) entgegengesetzten Richtung einwirkt.

6. Vorrichtung nach einem der Ansprüche 1 bis 5, **dadurch gekennzeichnet, dass** die Zahnstange (20) in ihrer geradlinigen Bewegung an jedem ihrer Enden durch zwei Lager (22) geführt wird.

## Claims

1. Device for detecting a quantity of hot water present in a boiler, comprising a heat-insulated vessel (3) and heating means (5) comprising:
- a capillary tube (10) containing a fluid (14) that undergoes volume changes based on the amount of hot water present in the vessel (3),
- at least one means of amplifying the volume change of the fluid (14), and
- a mechanism that converts the expansion of the fluid (14) into a visual signal indicating the amount of hot water present in the boiler, which device is **characterized in that** the capillary tube (10) is connected to a vessel (13) closed by an elastic diaphragm (15), the movement of the diaphragm (15) in response to the volume changes of the fluid (14) causing a link (17) to pivot, and the link (17) causing a rectilinear movement of a rack (20) meshing with a pinion (24) on which is mounted a needle (26) positioned in front of a graduated scale (28).

2. Device according to Claim 1, **characterized in that** the amplification means are set out at regular intervals up the height of the vessel.

3. Device according to Claim 1 or Claim 2, **characterized in that** the capillary tube (10) includes at least one coil (12).

4. Device according to Claim 1 or Claim 2, **characterized in that** the capillary tube (10) has at least one bulbous swelling.

5. Device according to one of Claims 1 to 4, **characterized in that** a rod (18) connects the diaphragm (15) to the link (17), and a return spring (21) acts on the link (17) in the opposite direction to the diaphragm (15).

6. Device according to one of Claims 1 to 5, **characterized in that** the rack (20) is guided in its rectilinear movement at each end by two bearings (22).
